# DEMANDE DE BREVET EUROPEEN

(11) **EP 1 988 498 A2**
(43) Date de publication de la demande: **05.11.2008**
(21) Numéro de dépôt: 08101636.2
(22) Date de dépôt: 14.02.2008
(51) Int. Cl.: G06Q 20/00, G07F 19/00

(54) **Procédé et système d'échange de données reservées à un utilisateur**

(30) Priorité: 15.02.2007 FR 0701100
(71) Demandeur: Compagnie Industrielle et Financiere d'Ingenierie Ingenico, 92220 Neuilly sur Seine (FR)
(72) Inventeur: Gauthier, Dominique, 92600, ASNIERES (FR); Romeo, Vincenzo, 00147, ROME (IT)
(74) Mandataire: Bioret, Ludovic

(57) **Abrégé**

Pour échanger des données réservées à un utilisateur ou à un groupe d'utittsateurs avec un équipement personnel, le procédé comprend étape (16) de communication à courte distance des dites données, par exemple de type e NFC, entre l'équipement personnel et une borne sécurisée conditionné par une identification dudit utilisateur et par une détection dudit équipement personnel à proximité de ladite borne sécurisée. Préférentiellement, la borne sécurisée obtient les données à partir d'une source intègre au moyen d'une liaison sécurisée de bout en bout.

## Description

Le domaine de l'invention est celui des transactions électroniques sécurisées dans lesquelles sont échangées des données réservées à un utilisateur ou à un groupe déterminé d'utilisateurs.

Un échange de données réservées à un utilisateur comprend par exemple les données habituellement communiquées dans le cadre d'une transaction bancaire : communication de montant, de coordonnées et de code pour débiter un compte. Un ensemble de données peut comprendre aussi un ou plusieurs programmes composés d'instructions, de paramètres et de variables pour effectuer une application réservée à un utilisateur par exemple en ce que son exécution est liée à un profil de l'utilisateur ou en ce qu'elle respecte un secret de l'utilisateur. Les données réservées à un utilisateur ne se limitent pas à celles énoncées dans les quelques exemples ici à titre purement illustratif. On pourrait encore citer le téléchargement de contenus multimédia ou de fichiers informatiques divers dont on tient à ce qu'on ne puisse les utiliser sans le consentement de l'utilisateur auquel ils appartiennent.

Les développements de l'électronique, de l'informatique ou encore des télécommunications, offrent certaines performances et souplesses en termes d'échanges de données.

On connaît par exemple les transactions commerciales sur Internet où il suffit de communiquer un numéro de carte de crédit pour payer un achat de produit facilement trouvé sur un serveur rapidement accessible. Les opérateurs de télécommunication proposent d'utiliser un téléphone, avantageusement mobile, comme moyen d'identification en s'appuyant entre autre sur le lien fort qui existe entre la carte SIM et l'abonné pour sécuriser des données sensibles et des utilisations de l'abonné. On peut alors mettre en oeuvre des mécanismes de téléchargement tels que ceux de type OTA (Over-The-Air) grâce à l'infrastructure de l'opérateur, pour répondre à une nécessité qui est celle de charger l'équipement personnel que constitue le téléphone mobile avec les paramètres bancaires de l'utilisateur. Une tendance commence à poindre pour remplacer la carte SIM par d'autres composants tels qu'une carte au format MMC (acronyme anglais de Multi Media Card) qui intègre un microcontrôleur de carte à puce, une carte au format SD (acronyme anglais de Secure Digital) incorporant une mémoire ferroélectrique adaptée au sans contact ou autre mémoire de ce type que les opérateurs téléphoniques voient comme des cartes super SIM avec des capacités avoisinant 1Go.

Cependant les techniques connues ne sont pas entièrement satisfaisantes. On peut certes espérer que les téléphones mobiles soient moins sensibles aux intrusions que des ordinateurs connectés à un réseau ouvert. Toutefois les accords que doivent passer les gestionnaires des données réservées, par exemple les organismes bancaires, avec chacun des opérateurs peuvent poser des problèmes d'ordre commercial, les informations confidentielles à livrer aux opérateurs posent des problèmes de sécurité. Une source d'insatisfaction, particulièrement en termes de souplesse, existe aussi pour l'utilisateur qui se trouve fortement lié à son opérateur du fait de la détention directe ou indirecte par ce dernier de données personnelles.

Un objet de l'invention est un procédé d'échange de données réservées à un utilisateur avec un équipement personnel pour remédier aux inconvénients de l'état de la technique. Le procédé comprend une étape de communication à courte distance des dites données entre l'équipement personnel et une borne sécurisée conditionné par une identification dudit utilisateur et par une détection dudit équipement personnel à proximité de ladite borne sécurisée.

La borne sécurisée, par exemple un terminal bancaire agissant ainsi comme un coffre-fort de données, permet d'affranchir tant le gestionnaire des données que l'utilisateur, de passer par un tiers grâce à la communication à courte distance. Cette combinaison a de nombreux avantages tels que celui de protéger le secret et l'intégrité des données échangées. Après s'être identifié, l'utilisateur peut s'assurer que personne d'autre n'est dans un voisinage suffisamment proche pour capter la communication à courte distance.

Particulièrement, le procédé d'échange de données comprend une étape de requête dans laquelle la borne sécurisée obtient les dites données à partir d'une source intègre au moyen d'une liaison sécurisée de bout en bout. Ceci renforce une immunité à d'éventuelles intrusions malveillantes.

Particulièrement encore, le procédé d'échange de données comprend une étape d'invitation à approcher l'équipement personnel de la borne sécurisée. Ceci présente l'avantage d'informer l'utilisateur d'un démarrage de phase sensible.

Non nécessairement mais avantageusement, lorsque la source intègre réside dans un serveur de confiance ou lorsque la source intègre réside dans une carte à puce, une puissance radiofréquence est émise par l'équipement personnel dans l'étape de communication à courte distance. Pour des communications à courte distance dans lesquelles c'est le récepteur qui transmet la puissance pour réaliser la communication tel que c'est le cas dans les technologies de type NFC (Near Field Communication) ou de type transpondeur, ceci permet à l'équipement personnel de télécharger des données à partir de la carte à puce introduite dans la borne sécurisée ou à partir du serveur relié à la borne sécurisée. Ainsi la borne sécurisée se présente comme une source fiable de données par laquelle sont acheminées les données en provenance de la carte à puce ou du serveur de confiance.

L'étape de requête peut être exécutée en parallèle à l'étape d'invitation, la précéder ou lui succéder. Il est intéressant de faire précéder l'étape d'invitation par l'étape de requête de façon à rendre les données immédiatement disponibles lors de l'approche de l'équipement personnel et de réduire ainsi la durée nécessaire à l'échange de données.

Un avantage supplémentaire est procuré par une source intègre qui réside dans l'équipement personnel. Un utilisateur désirant vider son équipement personnel pour en transférer ou non les données réservées vers un autre équipement personnel peut alors approcher son équipement personnel de la borne sécurisée pour lui transférer les données avant d'approcher éventuellement ensuite son autre équipement personnel pour poursuivre le transfert cette fois à partir de la borne sécurisée. On entend par équipement personnel autant un téléphone mobile que tout autre dispositif électronique tel qu'un lecteur MP3, un appareil photo, un PDA à condition de préférence que ce dispositif soit sécurisé.

Dans l'étape de communication à courte distance, une puissance radiofréquence émise par la borne sécurisée est particulièrement utile pour un équipement personnel doté d'un émetteur de type NFC ou transpondeur.

Un objet de l'invention est aussi un système d'échange de données réservées à un utilisateur avec un équipement personnel. Le système comprend une borne sécurisée agencée pour effectuer une communication à courte distance avec l'équipement personnel conditionné par une identification de l'utilisateur et par une détection de l'équipement personnel à proximité de la borne sécurisée.

Particulièrement la borne sécurisée est agencée pour obtenir les dites données à partir d'une source intègre au moyen d'une liaison sécurisée de bout en bout et/ou pour afficher un message d'invitation à approcher l'équipement personnel de la borne sécurisée.

Plus particulièrement, l'équipement personnel est agencé pour émettre une puissance par radiofréquence de façon à effectuer la communication à courte distance par lecture de données mises à disposition sur la borne lorsque la source intègre réside dans un serveur de confiance ou dans une carte à puce mise en contact avec la borne.

Alternativement ou simultanément, la borne sécurisée est agencée pour émettre une puissance par radiofréquence de façon à effectuer la communication à courte distance par écriture de données dans l'équipement personnel à partir de la borne lorsque la source intègre réside dans un serveur de confiance ou dans une carte à puce mise en contact avec la borne.

Alternativement ou simultanément encore, la borne sécurisée est agencée pour émettre une puissance par radiofréquence de façon à effectuer la communication à courte distance par lecture de données mises à disposition sur l'équipement personnel lorsque la source intègre réside dans l'équipement personnel ou lorsque la borne est à l'écoute pour détecter une approche d'équipement personnel vers lequel transférer d'autres informations. Dans ce dernier cas, les données mises à disposition sont par exemple simplement des données d'identification de l'équipement personnel.

D'autres caractéristiques et avantages de l'invention apparaîtront à la lecture de la description détaillée qui suit des modes de réalisation de l'invention, donnés à titre d'exemple uniquement et en références aux dessins qui montrent:
- figure 1, une vue schématique d'un système d'échange de données dans le cadre de l'invention;
- figure 2, des étapes de procédé dans une première mise en oeuvre de l'invention;
- figure 3, des étapes de procédé dans une deuxième mise en oeuvre de l'invention.

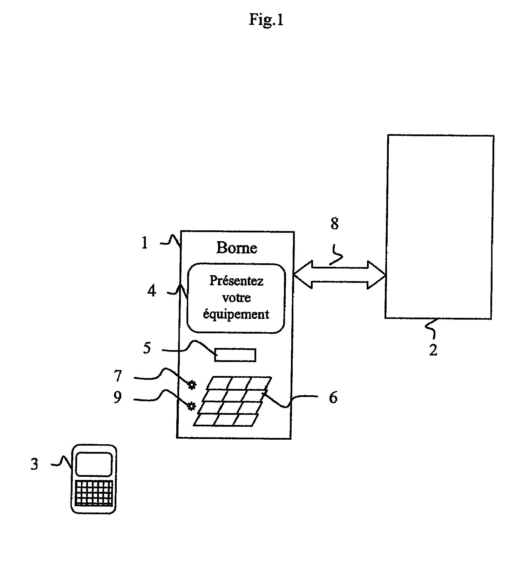

En référence à 1a figure 1, un système d'échange de données pour mettre en oeuvre l'invention comprend une borne sécurisée 1 agencée pour effectuer une communication à courte distance avec un équipement personnel 3.

A titre d'exemple de borne sécurisée 1, on peut citer un terminal de paiement sous le contrôle d'un employé dans une agence bancaire et dont il est fait généralement usage lors de l'émission ou du renouvellement d'une carte de paiement, un terminal de paiement dans un magasin ou encore un Distributeur Automatique de Billets tel qu'on en voit à l'entrée des banques ou dans les aéroports. Ce qui importe est que la borne soit sécurisée, c'est-à-dire qu'elle soit protégée contre les intrusions et que toute tentative d'effraction laisse des traces clairement décelables.

La borne sécurisée 1 comprend un écran 4 qui permet d'afficher des messages tel qu'un message ici représenté d'invitation à approcher l'équipement personnel 3 de la borne sécurisée. La borne comprend aussi une fente 5 adaptée pour y introduire une carte à puce ou à bande magnétique ou holomagnétique, non représentée, typiquement une carte de crédit, voire une carte de fidélité, carte de transport, d'identité, de santé ou encore une carte sans contact. Dans ce dernier cas, la fente est remplacée par le lecteur qui convient. Un clavier 6 permet alors à un utilisateur de s'authentifier ou pour le moins de s'identifier en tapant un code secret sur le clavier 6 après avoir introduit sa carte à puce dans la fente 5 qui dans ce cas permet alors une authentification. En absence d'introduction de carte, un code généralement plus long que les quatre chiffres du code secret, permet alors une simple identification qui peut être suffisante par exemple pour simplement charger une mise à jour de logiciel. Une identification résulte aussi de la simple introduction de la carte à puce dans la fente 5.

La borne sécurisée 1 comprend un émetteur 7 pour effectuer une communication à courte distance. A la différence des émetteurs classiques qui transmettent leur information sur une porteuse dont ils fournissent la puissance, les émetteurs de communication à courte distance transmettent généralement leur information sur une porteuse dont la puissance est fournie par le récepteur. C'est le cas par exemple des transpondeurs dans lesquels le récepteur rayonne une porteuse à généralement basse fréquence avec une faible portée et interprète une information en provenance de l'émetteur en détectant les variations d'énergie absorbées et/ou réfléchies par l'émetteur. Les transpondeurs à basse fréquence conviennent essentiellement pour des transferts d'information de faible volume, un nombre minimal d'alternances de la porteuse étant nécessaire pour interpréter une variation d'énergie absorbée. En ce sens les récepteurs de communication à courte distance se comportent comme de véritables lecteurs au sens courant car ils pilotent en puissance la lecture d'une information disponible.

Une technologie de communication à courte distance intéressante est la technologie NFC, acronyme de l'expression anglo-saxonne « Near Field Communication » qui signifie communication de proximité. La gamme de fréquence est plus élevée que dans les transpondeurs classiques, dans une bande de 13,56 Mhz, elle autorise des débits allant jusqu'à 424 Kbits/s. Par rapport à une autre technologie connue sous le nom de Bluetooth, la technologie NFC a pour atout une taille réduite qui tient sur de petites puces adaptées à être mises en oeuvre dans de petits dispositifs électroniques et convient donc bien aux téléphones mobiles.

L'émetteur 7 de communication à courte distance permet d'abord de détecter un équipement personnel 3 amené à proximité lorsque celui-ci est équipé d'un récepteur associé qui rayonne la porteuse radiofréquence.

La borne 1 est agencée pour mettre alors à disposition de l'émetteur 7 l'information, c'est-à-dire les données réservées à l'utilisateur et ceci pendant une durée parfaitement déterminée qui ne dépasse guère la durée nécessaire à la communication des données, compte tenu du débit d'échange offert par la communication à courte distance. L'équipement personnel 3 étant agencé pour émettre une puissance par radiofréquence, la communication à courte distance résulte de la lecture des données mises à disposition de l'émetteur 7.

Dans le système d'échange de données représenté en figure 1, la borne sécurisée 1 est agencée pour obtenir les données réservées à partir d'une source intègre au moyen d'une liaison sécurisée de bout en bout.

Lorsque la source intègre réside dans un serveur de confiance 2, par exemple un ordinateur bancaire de type mainframe, la liaison sécurisée est typiquement une liaison privée 8 reliant de manière cryptée ou physiquement contrôlée la borne 1 et le serveur 2.

Lorsque la source intègre réside dans une carte à puce, la liaison sécurisée est typiquement un circuit interne disposé derrière la fente 5 à l'intérieur de la borne 1 et contrôlée par des protocoles d'échange cryptographiques et/ou des sécurisations physiques.

Dans un mode de réalisation amélioré, la borne 1 comprend un récepteur 9 de technologie semblable à celle de l'émetteur 7. Ceci permet de prendre en considération une source intègre qui réside dans l'équipement personnel 3. Grâce à ce dispositif, l'utilisateur n'a pas besoin de s'adresser à son opérateur téléphonique lorsqu'il change de téléphone mobile ou lorsqu'il préfère charger ses données réservées dans un autre dispositif tel que par exemple un dispositif électronique dédié à une application de porte-monnaie électronique.

Grâce au récepteur 9, la borne sécurisée 1 étant agencée pour émettre une puissance par radiofréquence, la communication à courte distance résulte de la lecture des données mises à disposition par l'équipement personnel 3.

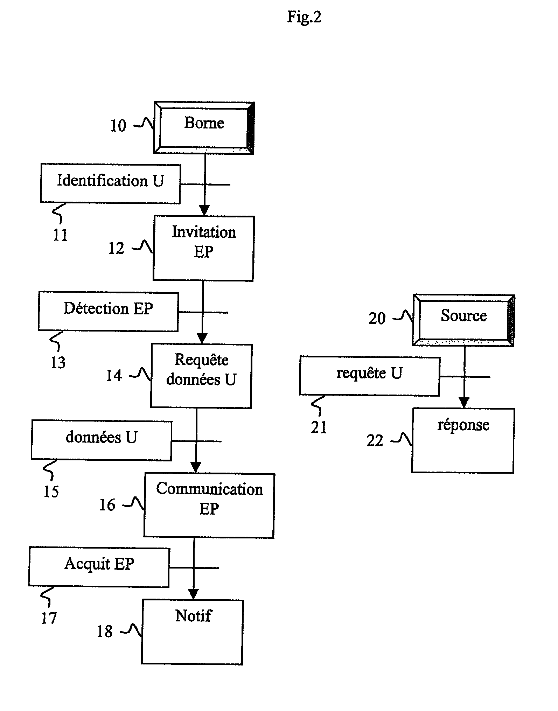

En référence à la figure 2, on décrit à présent des étapes de procédé d'échange de données réservées à un utilisateur avec un équipement personnel. Il est préférable mais non nécessaire que le procédé qui met en oeuvre les étapes décrites s'appuie sur le système tel qu'il est décrit précédemment en référence à la figure 1.

Le procédé utilise une borne sécurisée qui se trouve initialement dans une étape 10 de veille activée en état d'attente qu'un utilisateur d'équipement personnel se manifeste.

Une transition 11 est validée lorsque la borne sécurisée détecte une identification d'utilisateur. L'identification est typiquement détectée par une reconnaissance de code personnel qui lorsqu'elle est conforme à un procédé cryptographique de carte à puce, constitue plus précisément une authentification. Le code personnel peut résulter d'une frappe de touche sur un clavier de la borne, d'une reconnaissance d'empreinte digitale, de fond de l'oeil, de reconnaissance vocale ou autre. Une validation de la transition 11 lorsque l'étape 10 est activée, a pour effet de désactiver l'étape 10 et d'activer une étape 12.

Dans l'étape 12, on invite l'utilisateur à approcher son équipement personnel de la borne. L'invitation peut être faite à titre non limitatif au moyen d'un affichage sur un écran de la borne, d'un message vocal émis par un haut-parleur de la borne. On peut aussi prévoir dans l'étape 12 d'offrir un choix à l'utilisateur sur une source intègre à partir de laquelle télécharger des données qui lui sont réservées, par exemple une source résidant dans un serveur de confiance distant, une source résidant dans une carte à puce ou une source résidant dans l'équipement personnel lui-même. On peut aussi prévoir dans l'étape 12 d'offrir un choix sur un type de données à télécharger, valeurs de paramètres liés à un profil de l'utilisateur, contenu multimédia personnel ou séquence d'instructions d'un programme à installer, ce choix conditionnant ou non une sélection de source intègre.

Une transition 13 est validée lorsque la borne sécurisée détecte l'équipement personnel à proximité. La proximité est typiquement mais non nécessairement détectée par une réception de signal radio rayonné à partir de l'équipement personnel. Une validation de la transition 13 lorsque l'étape 12 est activée, a pour effet de désactiver l'étape 12 et d'activer une étape 14.

Dans l'étape 14, la borne 11 émet une requête à destination de la source intègre pour obtenir des données réservées à l'utilisateur. Cette requête est transmise sur une liaison sécurisée telle que le permet un lien crypté ou physiquement privé, câble connecté d'une part à la borne sécurisée et d'autre part à un ordinateur faisant office de serveur via éventuellement des autocommutateurs parfaitement contrôlés, circuit intérieur à la borne elle-même pour lire une carte à puce ou liaison de communication à courte distance.

Une transition 21 est validée lorsque la source intègre reçoit la requête. Une validation de la transition 21 lorsqu'une étape 20 est activée dans un état initial d'attente de la source intègre, a pour effet de désactiver l'étape 20 et d'activer une étape 22.

Dans l'étape 22, la source intègre émet une réponse à destination de la borne sécurisée sur la liaison sécurisée utilisée pour recevoir la requête ou sur une liaison de type semblable. La réponse contient les données demandées.

Une transition 15 est validée lorsque la borne sécurisée obtient les données en provenance de la source intègre. Une validation de la transition 15 lorsque l'étape 14 est activée, a pour effet de désactiver l'étape 14 et d'activer une étape 16.

Dans l'étape 16, une communication à courte distance de données réservées à l'utilisateur est exécutée entre l'équipement personnel et la borne sécurisée. Les données à destination de l'équipement personnel sont mises à disposition de préférence pendant une durée limitée, en attente de lecture par l'équipement personnel qui émet alors une puissance radiofréquence dont l'atténuation ou la réflexion reflète séquentiellement la valeur des données. Les données originaires de l'équipement personnel sont lues par la borne sécurisée en émettant une puissance radiofréquence absorbée ou réfléchie par l'équipement personnel à l'image des valeurs des données à lire.

Une transition 17 est validée par acquittement de la communication à courte distance qui indique que toutes les données à transmettre ont été correctement reçues par leur destinataire. Une validation de la transition 17 lorsque l'étape 16 est activée, a pour effet de désactiver l'étape 16 et d'activer une étape 18.

Dans l'étape 18, la borne sécurisée notifie que la communication avec l'équipement personnel s'est correctement passée. Une notification à l'utilisateur au moyen d'une annonce vocale ou visuelle a pour effet de le conforter sur le succès de l'opération. Une notification au serveur de confiance ou à la carte à puce permet de tenir un journal des communications effectuées de façon par exemple à contrôler d'éventuelles duplications ou une date, voire un lieu de tentative frauduleuse avortée ou réussie.

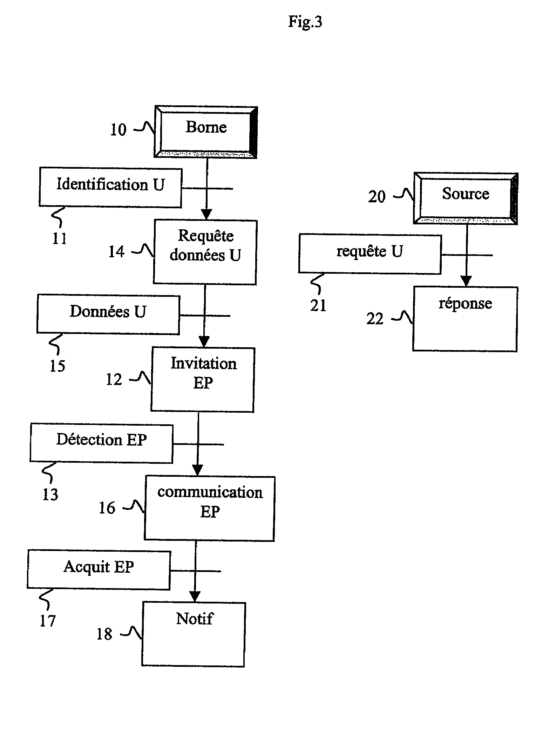

Une variante possible du procédé est maintenant expliquée en référence à la figure 3. Seules les modifications du procédé précédemment décrit en référence à la figure 2 sont détaillées, pour les transitions et étapes ne subissant pas de modification, on peut se reporter aux explications précédentes pour lesquelles les références aux figures désignent les mêmes éléments.

Une validation de la transition 11 lorsque l'étape 10 est activée, a pour effet de désactiver l'étape 10 et d'activer l'étape 14. Cette activation qui émet la requête à destination de la source dès l'identification de l'utilisateur permet de mettre les données plus rapidement à disposition au bénéfice d'une plus grande fluidité ressentie par l'utilisateur.

L'étape 12 peut alors être activée par une validation de la transition 15 mais peut aussi être activée en parallèle avec l'étape 14 par une validation de la transition 11, auquel cas on comprendra que l'étape 16 est activée par les validations de la transition 13 et de la transition 15.

L'utilisateur a le plus de chance de devoir tenir son équipement personnel le moins longtemps possible à proximité de la borne lorsque l'étape 14 de requête précède l'étape 12 d'invitation. Ce qui peut soulager sa fatigue.

Bien entendu, la présente invention n'est pas limitée aux modes de réalisations décrits à titre d'exemple; ainsi, on peut prévoir plus d'autres étapes que celles montrées sur les figures 2 et 3.

## Revendications

1. Procédé d'échange de données réservées à un utilisateur avec un équipement personnel **caractérisé en ce qu'**il comprend une étape (16) de communication à courte distance des dites données entre l'équipement personnel et une borne sécurisée conditionné par une identification dudit utilisateur et par une détection dudit équipement personnel à proximité de ladite borne sécurisée.

2. Procédé d'échange de données selon la revendication 1 **caractérisé en ce qu'**il comprend une étape (14) de requête dans laquelle la borne sécurisée obtient les dites données à partir d'une source intègre au moyen d'une liaison sécurisée de bout en bout.

3. Procédé d'échange de données selon la revendication 1 ou 2 **caractérisé en ce qu'**il comprend une étape (12) d'invitation à approcher l'équipement personnel de la borne sécurisée.

4. Procédé d'échange de données selon l'une des revendications 1 à 3 **caractérisé en ce que** ladite source intègre réside dans un serveur de confiance.

5. Procédé d'échange de données selon l'une des revendications 1 à 3 **caractérisé en ce que** ladite source intègre réside dans une carte à puce.

6. Procédé d'échange de données selon l'une des revendications précédentes **caractérisé en ce que** dans l'étape (16) de communication à courte distance, une puissance radiofréquence est émise par l'équipement personnel.

7. Procédé d'échange de données selon l'une des revendications précédentes **caractérisé en ce que** l'étape (14) de requête précède l'étape (12) d'invitation.

8. Procédé d'échange de données selon l'une des revendications 1 à 3 **caractérisé en ce que** ladite source intègre réside dans l'équipement personnel.

9. Procédé d'échange de données selon la revendication 8 **caractérisé en ce que** dans l'étape (16) de communication à courte distance, une puissance de communication est émise par la borne sécurisée.

10. Système d'échange de données réservées à un utilisateur avec un équipement personnel (3) **caractérisé en ce qu'**il comprend une borne sécurisée (1) agencée pour effectuer une communication à courte distance avec l'équipement personnel conditionné par une identification dudit utilisateur et par une détection dudit équipement personnel à proximité de ladite borne sécurisée.

11. Système d'échange de données selon la revendication 10 **caractérisé en ce que** la borne sécurisée (1) est agencée pour obtenir les dites données à partir d'une source intègre au moyen d'une liaison sécurisée de bout en bout.

12. Système d'échange de données selon la revendication 10 ou 11 **caractérisé en ce que** la borne sécurisée (1) est agencée pour afficher un message d'invitation à approcher l'équipement personnel (3) de la borne sécurisée.

13. Système d'échange de données selon l'une des revendications 10 à 12 **caractérisé en ce que** ladite source intègre réside dans un serveur de confiance (2).

14. Système d'échange de données selon l'une des revendications 10 à 12 **caractérisé en ce que** ladite source intègre réside dans une carte à puce.

15. Système d'échange de données selon l'une des revendications 10 à 14 **caractérisé en ce que** l'équipement personnel est agencé pour émettre une puissance par radiofréquence de façon à effectuer la communication à courte distance.

16. Système d'échange de données selon l'une des revendications 10 à 12 **caractérisé en ce que** ladite source intègre réside dans l'équipement personnel (3).

17. Système d'échange de données selon la revendication 16 **caractérisé en ce que** la borne sécurisée (1) est agencée pour émettre une puissance par radiofréquence de façon à effectuer la communication à courte distance.
